# EUROPÄISCHE PATENTSCHRIFT

(11) **EP 2 891 586 B1**
(45) Veröffentlichungstag und Bekanntmachung des Hinweises auf die Patenterteilung: **21.06.2017**
(21) Anmeldenummer: 14003063.6
(22) Anmeldetag: 05.09.2014
(51) Int. Cl.: B60T 7/20, B60T 13/08

(54) **Anhänger mit autarkem Druckluft-Bremssystem**
Trailer with autonomous compressed air braking system
Remorque dotée d'un système de freinage pneumatique

(30) Priorität: 07.01.2014 DE 202014000030 U; 08.04.2014 EP 14001275
(43) Veröffentlichungstag der Anmeldung: 08.07.2015
(73) Patentinhaber: Unsinn Fahrzeugtechnik GmbH, 86684 Holzheim (DE)
(72) Erfinder: Unsinn, Josef, 86684 Holzheim (DE)
(74) Vertreter: Gallo, Wolfgang

(56) Entgegenhaltungen:
- WO-A1-00/53479
- DE-A1-102008 041 687
- FR-A- 1 591 098

## Beschreibung

Die Erfindung betrifft einen druckluftgebremsten Kraftfahrzeug-Anhänger mit vollständig autarkem Druckluftbremssystem, also auch mit eigener Druckluftbeschaffungsanlage.

Die klassischen Bremssysteme für gebremste Anhänger sind die Auflaufbremse, die für Anhänger bis zu 3,5 Tonnen zulässigem Gesamtgewicht Anwendung findet, und die Druckluftbremse, die hauptsächlich für Anhänger über 3,5 Tonnen zulässigem Gesamtgewicht Anwendung findet, aber auch für Anhänger bis zu 3,5 Tonnen zulässigem Gesamtgewicht eingesetzt wird.

Während die Auflaufbremse eine autarke, nämlich von der Bremsanlage des Zugfahrzeugs unabhängige Bremsanlage des Anhängers verkörpert, sind in herkömmlicher Weise druckluftgebremste Anhänger auf eine Druckluftbremsanlage oder mindestens eine Druckluftbeschaffungsanlage im Zugfahrzeug angewiesen. Über diese wird die anhängerseitige Anlage mit Druckluft gespeist und wird die Druckluftbremse des Anhängers mit dem Bremsluftdruck zur Betätigung der Bremse beaufschlagt.

Damit scheidet der Betrieb herkömmlicher druckluftgebremster Anhänger in Verbindung mit Zugfahrzeugen ohne Druckluftbremsanlage oder Druckluftbeschaffungsanlage aus, und es können dort nur Anhänger mit Auflaufbremse eingesetzt werden. Die Nachteile der Auflaufbremse sind bekannt. Sie arbeitet mechanisch, indem sie die vom Anhänger auf das Zugfahrzeug ausgeübte Schubkraft zur mechanischen Erzeugung der Bremskraft auf die Anhängerradbremsen ausnutzt. Durch die so erzeugte Bremsung des Anhängers wird zwar die Schubkraft des Anhängers auf das Zugfahrzeug erheblich reduziert, aber gleichwohl verbleibt eine nicht unerhebliche Restschubkraft des Anhängers auf das Zugfahrzeug, ohne welche eine Bremsung des Anhängers nicht erfolgen kann, was das Fahrverhalten des Zugfahrzeugs spürbar verändert, insbesondere wenn die Schubkraft des Anhängers in Kurven auf das Zugfahrzeug einwirkt und damit auch eine seitliche Schubkomponente auf das Heck des Zugfahrzeugs ausübt.

Deshalb ist es auch bekannt, Zugfahrzeuge, die nicht mit einer als Druckluftbremsanlage ausgebildeten Betriebsbremse ausgestattet sind, mit einer Druckluftbremsanlage nachzurüsten oder auszurüsten, um statt eines Anhängers mit Auflaufbremse einen druckluftgebremsten Anhänger mitführen zu können. Dies wird beispielsweise bei Traktoren angewendet, aber auch bei größeren Geländewagen, Kombifahrzeugen oder Kleinlastwagen. Der Aufwand dafür ist allerdings sehr hoch und entsprechend teuer.

Eine bessere Lösung erfordert, druckluftgebremste Anhänger mit Zugfahrzeugen kombinieren zu können, die nicht bereits mit einer Druckluftbremsanlage als Betriebsbremse oder wenigstens mit einer Druckluftbeschaffungsanlage ausgestattet sind. Hierfür ist ein erheblicher Bedarf anzunehmen, da beispielsweise Handwerksbetriebe in großem Umfang mit Kastenwagen oder Kleinlastwagen als Betriebs- oder Montagefahrzeuge arbeiten und vielfach Anhänger benötigt werden, hinsichtlich derer ein erheblicher Sicherheitsgewinn erzielbar wäre, wenn sie mit Druckluft gebremst werden könnten.

Ein Druckluft-Bremssystem für einen Fahrzeuganhänger nach dem Oberbegriff der unabhängigen Ansprüche 1 und 7 ist aus der FR 1 591 098 bekannt. Ein ähnliches System ist in der WO 00/53479 A1 beschrieben.

Aufgabe der Erfindung ist es demgegenüber, eine verbesserte Ansteuerung des Anhängerbremsventils in dem Druckluftbremssystem für einen Kraftfahrzeuganhänger zu schaffen.

Diese Aufgabe wird gemäß der Erfindung alternativ durch die Anordnungen nach den unabhängigen Ansprüchen 1 oder 7 gelöst.

Die Erfindung sieht also vor, den Anhänger mit einer vollständig autarken Druckluftbremsanlage auszuführen, die unabhängig vom Betriebsbremssystem des Zugfahrzeugs ist und daher auch keine Nachrüstung des Zugfahrzeugs mit einer Druckluftbremsanlage oder wenigstens einer Druckluftbeschaffungsanlage zum Betrieb der Anhänger-Druckluftbremse erfordert. Dabei kann aber die Anhänger-Druckluftbremse teilweise oder ganz über das nicht mit Druckluft arbeitende Betriebsbremssystem des Zugfahrzeugs betätigt und gesteuert werden, insbesondere auf elektrischem Weg, und sie kann auch teilweise oder ganz durch den Anhänger selbst, nämlich durch eine vom Anhänger auf das Zugfahrzeug ausgeübte Auflaufkraft betätigt und gesteuert werden.

Das erfindungsgemäße autarke Druckluft-Bremssystem des Anhängers verfügt demzufolge über eine eigene Druckluftbeschaffungsanlage, die einen antreibbaren Kompressor sowie einen Druckluftvorratsbehälter umfaßt. Ein Bremsventil, über welches die Radbremszylinder des Anhängers mit dem Bremsluftdruck beaufschlagt werden, kann auf verschiedene Weise gesteuert werden

Die Steuerung kann beispielsweise, ähnlich wie bei der herkömmlichen Auflaufbremse, durch die Schubkraft des Anhängers auf das Schubfahrzeug erfolgen, wobei diese Schubkraft in ein mechanisches Wegsignal oder ein elektrisches Signal umgesetzt werden kann, das zur Steuerung der Anhängerbremsbetätigung verwendet wird, oder es kann dazu ein vom Zugfahrzeug übertragenes elektrisches Signal verwendet werden, oder es kann vorzugsweise eine Kombination aus einem vom Anhänger durch den Auflaufdruck erzeugten mechanischen oder elektrischen Signal und einem vom Zugfahrzeug übertragenen elektrischen Signal, beispielsweise in Gestalt des Bremslichtstroms, zur Steuerung der Anhängerbremsbetätigung verwendet werden.

Da ein Anhänger schon wegen der Lichtanlage stets über eine elektrische Kupplung elektrisch mit dem Zugfahrzeug verbunden sein muss, bietet es sich an, diese mehrpolige elektrische Verbindung auch zur Realisierung von Sicherheitsmerkmalen und Sonderfunktionen zu nutzen, die aufgrund der Besonderheiten eines autarken Druckluftbremssystems des Anhängers ohne Verbindung zu einem Druckluftsystem des Zugfahrzeugs sinnvoll sind.

So kann die Bremslichtleitung auch als elektrische Steuerleitung benutzt werden, um die Bremsanlage des Anhängers nur dann aktiv zu schalten, wenn im Zugfahrzeug die Bremse betätigt wird und folglich während der Bremsbetätigung ein Bremslichtstrom fließt, und die Anhängerbremsanlage kann dann, wenn sie so aktiv geschaltet ist, mit einer bedarfsgemäßen, beispielsweise über eine Auflaufkraft gesteuerte Intensität die Anhängerbremse betätigen. Damit kann sichergestellt werden, dass bei Ruckelbewegungen des Anhängers, beispielsweise auf holpriger Straße, keine unkontrollierten Bremsstöße ausgelöst werden, und dass auch beim Rückwärtsfahren mit dem Anhänger, solange die Bremse im Zugfahrzeug nicht betätigt wird, auch keine Bremsung des Anhängers erfolgt. Weiter kann auch das Rückwärtsfahrsignal des Zugfahrzeugs, also die Strombeaufschlagung der Rückfahrscheinwerferleitung, dazu genutzt werden, die Anhängerbremsanlage während des Rückwärtsfahrens auch dann inaktiv zu schalten, wenn im Zugfahrzeug die Bremse betätigt wird. Denn dabei kann eine Bremsung des Anhängers unerwünscht sein.

Ein weiterer wichtiger Aspekt ist die Sicherheit beim Abkuppeln des Anhängers vom Zugfahrzeug, um ein Wegrollen des Anhängers zu verhindern, sowie beim Abstellen des Gespanns am Berg, oder die Schadensbegrenzung im Falle eines Abreißens des Anhängers vom fahrenden Zugfahrzeug. Dazu wird vorzugsweise der Anhänger in an sich bekannter Weise mit einem Federspeicher ausgebildet, dessen Feder die Anhängerbremse mechanisch betätigt, und die durch Luftdruck in der autarken Anhängerbremsanlage gelöst wird. Über die elektrische Verbindung des Anhängers mit dem Zugfahrzeug können Maßnahmen getroffen werden, dass bei Unterbrechung dieser elektrischen Verbindung beim Abkuppeln des Anhängers oder bei einem Abreißen des Anhängers vom Zugfahrzeug der Federspeicher entlüftet und der Anhänger gebremst wird. Ebenso kann über die elektrische Verbindung dafür gesorgt werden, dass nach dem Ankuppeln des Anhängers an das Zugfahrzeug eine Druckbeaufschlagung des Federspeichers und damit ein Lösen der Anhängerbremse erst möglich wird, wenn der Zündschlüssel eingesteckt und das Zündschloss betätigt ist, und dass der Federspeicher entlüftet und der Anhänger gebremst wird, wenn der Zündschlüssel abgezogen wird.

Einzelheiten und denkbare Alternativen werden in der folgenden Beschreibung erörtert.

Die Erfindung wird nunmehr anhand eines Ausführungsbeispiels unter Bezugnahme auf die anliegende Zeichnung mehr im einzelnen beschrieben, wobei dann jeweils im Zusammenhang auch Alternativen und Abwandlungsmöglichkeiten erörtert werden.

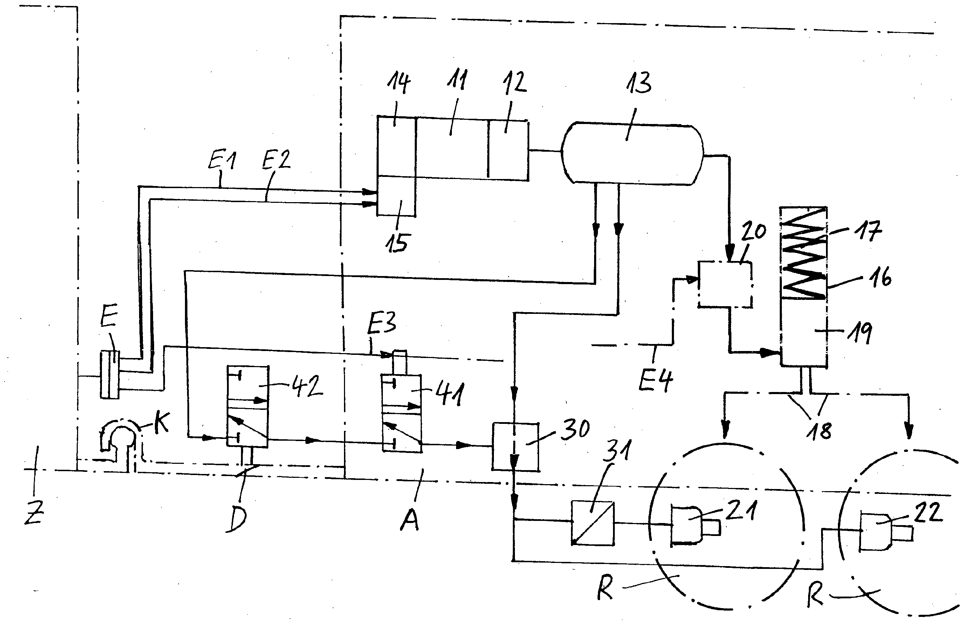

Die Zeichnung zeigt in schematischer Darstellung einen Anhänger, der mit einem Zugfahrzeug gekuppelt ist, und dessen autarke Anhänger-Druckluftbremsanlage.

Die Zeichnung zeigt (jeweils strichpunktiert angedeutet) einen zweiachsigen Anhänger A, der über eine Deichsel D an ein Zugfahrzeug Z angehängt ist.

Eine Druckluftbremsanlage des Anhängers A ist als Blockschaltbild dargestellt.

Die Druckluftbremsanlage des Anhängers A umfaßt zunächst eine Druckluftbeschaffungsanlage, die aus einem elektrischen Kompressor 11 mit einem Lufttrockner 12 sowie aus einem von dem Kompressor 11 über den Lufttrockner 12 gespeisten Druckluftvorratsbehälter 13 mit einem Volumen von beispielsweise 10 Litern besteht.

Dem Kompressor 11 ist beim Ausführungsbeispiel ein Elektromotor 14 zu dessen Antrieb sowie eine elektrische Steuerung 15 für die bedarfsweise Steuerung des Kompressorbetriebs zugeordnet, um den Druckluftvorrat im Behälter 13 bedarfsweise nachzufüllen und auf einem Soll-Luftdruck zu halten. Die elektrische Stromversorgung des Elektromotors 14 und der elektrischen Steuerung 15 erfolgt beim Ausführungsbeispiel über elektrische Leitungen E1 und E2 positiver bzw. negativer Polarität über die elektrische Kupplung E zwischen dem Zugfahrzeug Z und dem Anhänger A.

Die Stromversorgung des Elektromotors 14 zum Antrieb des Kompressors 11 kann auch über eine im Anhänger eingebaute elektrische Batterie erfolgen, um die Stromentnahme aus dem Zugfahrzeug zu begrenzen. Es kann auch eine elektrische Steuerschaltung vorgesehen sein, welche die Stromversorgung je nach Verfügbarkeit ganz oder teilweise aus der Stromversorgung vom Zugfahrzeug oder aus der Batterie des Anhängers steuert.

Selbstverständlich kann der Kompressor 11 auch auf andere Weise angetrieben werden. Beispielsweise kann ein kuppelbarer mechanischer Antrieb über mindestens ein Rad des Anhängers vorgesehen sein. Möglich ist es auch, einen elektrischen Antrieb mit einem mechanischen Antrieb zu kombinieren und diese wahlweise zuzuschalten, wobei beispielsweise der elektrische Antrieb genutzt werden kann, wenn der Anhänger noch steht und keine Radbewegung verfügbar ist. Zum Auffüllen des Druckluftvorratsbehälters des Anhängers kann auch ein Füllventil vorgesehen sein, das eine Druckluftzufuhr von einer stationären Druckluftquelle in den stehenden und auch abgekuppelten Anhänger ermöglicht, um sicherzustellen, dass die Druckluftbremsanlage des Anhängers beim Ankuppeln und Losfahren mit gefülltem Druckluftvorratsbehälter bereits vollständig betriebsbereit ist.

Aus dem Druckluftvorratsbehälter 13 steht über den Luftdruck die Betätigungskraft zur Betätigung der Anhänger-Druckluftbremse zur Verfügung, die an den Rädern R des Anhängers A über einen der jeweiligen Radbremse zugeordneten Membranzylinder 21 für die Räder der vorderen Achse und einen Membranzylinder 22 für die Räder der hinteren Achse zur Anwendung kommt.

Weiter ist vorzugsweise ein Federspeicher 16 vorgesehen, der als nicht zwingender, aber zur Verbesserung der Sicherheit vorzugsweise vorhandener Bestandteil der Anhängerbremsanlage strichpunktiert dargestellt ist, und dessen Feder 17 über eine Wirkungsverbindung 18 auf die Radbremsen der Räder R wirkt, wenn die Feder 17 nicht durch Luftdruck in der Luftkammer 19 des Federspeichers zusammengedrückt wird. Die Beaufschlagung der Luftkammer 19 erfolgt über eine Leitungsverbindung mit Druckluft aus dem Druckluftvorratsbehälter 13.

Die Bremsenbetätigung erfolgt über ein Anhängerbremsventil 30, das den Membranzylindern 21 und 22 vorgeschaltet ist, und das seinerseits durch Steuerventile 41 und 42 mittels eines pneumatischen Steuerdrucks gesteuert wird. Das Anhängerbremsventil hat einen Drucklufteinlaß, der mit dem Druckluftvorratsbehälter 13 verbunden ist, einen Druckluftauslaß, der mit den Membranzylindern 21 und 22 zur Bremsdruckbeaufschlagung der Radbremsen verbunden ist, und einen Steuerdruckeinlaß, der mit dem Auslaß des Steuerventils 41 und durch dieses mit dem Auslaß des Steuerventils 42 verbunden ist. Der Steuerdruck steuert die Betätigung, nämlich den Öffnungsgrad des Anhängerbremsventils zum Erzeugen des jeweils notwendigen Bremsdrucks.

Das Anhängerbremsventil 30 kann selbstverständlich auch als Park-Löse-Sicherheitsventil ausgebildet sein, so dass es außer der Funktion der bremsbedarfsabhängigen Betriebsbremsbetätigung der Radbremsen auch die entsprechenden Sicherheitsfunktionen wie Abriss-Sicherheitsfunktion oder Druckrückhaltung bei abgekuppeltem Anhänger zum Bremsen des abgekuppelten geparkten Anhängers übernehmen kann.

Den Membranzylindern 21 für die Räder der vorderen Achse ist außerdem ein Anpassungsventil 31 zugeordnet, das zwischen der Verzweigung der vom Anhängerbremsventil kommenden Bremsdruckluftleitung und den Membranzylindern 21 der vorderen Räder angeordnet ist, und das zur Abstimmung der relativen Bremsbetätigungskräfte auf die vorderen und hinteren Räder R dient.

Der pneumatische Steuerdruck (in den Ansprüchen verallgemeinert als Steuergröße bezeichnet) zur öffnungsgradgesteuerten Betätigung des Anhängerbremsventils 30 wird ebenfalls aus dem Druckluftvorratsbehälter 13 über die Steuerventile 41 und 42 bereitgestellt. Diese sind, wie das Blockschaltbild in der Zeichnung zeigt, pneumatisch in Reihe geschaltet. Diese beiden hintereinander geschalteten Steuerventile 41 und 42 werden ihrerseits auf unterschiedliche Weise gesteuert. Das der Steuerung des Steuerventils 42 dienende mechanische oder elektrische Signal wird in den Ansprüchen als Steuersignal bezeichnet, und das zur Steuerung des Steuerventils 41 dienende Signal wird dort als zusätzliches Steuersignal bezeichnet.

Das Steuerventil 41 (in den Ansprüchen als zusätzliches Steuerventil bezeichnet), das hier beim Ausführungsbeispiel das zweite Steuerventil in der Reihenschaltung der beiden Steuerventile zwischen dem Druckluftvorratsbehälter 13 und dem Anhängerbremsventil 30 ist, ist als elektrisches 3/2-Wegeventil ausgebildet und wird durch ein elektrisches Steuersignal (in den Ansprüchen als zusätzliches Steuersignal bezeichnet) betätigt. Die Bezeichnung "3/2-Wegeventil" bedeutet ein Ventil mit drei Anschlüssen (hier: Drucklufteinlaß, Druckluftauslaß und Entlüftungsauslaß) und zwei Funktionen (hier: Druckluftdurchleitung und Entlüftung).

Das elektrische Steuersignal wird durch den Bremslichtstrom bereitgestellt, der über eine Leitung E3 über die elektrische Kupplung E zwischen dem Zugfahrzeug Z und dem Anhänger A zugeführt wird, und der jeweils in dem Augenblick vorhanden ist, wenn der Fahrer des Zugfahrzeugs Z die Bremse betätigt und daher die Bremslichter aufleuchten. Durch diesen Bremslichtstrom wird das Steuerventil 41 aus einem Ruhezustand, in dem der Drucklufteinlaß geschlossen und der Entlüftungsauslaß geöffnet ist, das Ventil sich also in der Entlüftungsstellung befindet, in eine Arbeitsstellung betätigt, in welcher der Entlüftungsauslaß geschlossen und der Drucklufteinlaß geöffnet ist, so dass die Steuerdruckluftleitung auf Durchlaß geschaltet ist und ein am Drucklufteinlaß anstehender Steuerdruck an das Anhängerbremsventil durchgeleitet werden kann.

Dem Steuerventil 41 pneumatisch vorgeschaltet ist das Steuerventil 42. Dieses ist beim Ausführungsbeispiel als mechanisches 3/2-Wegeventil ausgebildet. Seine drei Anschlüsse sind Drucklufteinlass, Druckluftauslass und Entlüftungsauslass, und seine zwei Funktionen sind öffnungsgradgesteuerte Druckluftdurchleitung und Entlüftung. Der Drucklufteinlass ist mit dem Druckluftvorratsbehälter 13 verbunden, und der Druckluftauslass ist mit dem Drucklufteinlass des nachgeschalteten Steuerventils 41 verbunden.

Dieses Steuerventil 42 dient der Erzeugung eines variablen, dem Ausmaß des jeweiligen Bremsbedarfs entsprechenden Steuerdrucks, der über das nachgeschaltete, auf Druckluftdurchleitung geschaltete Steuerventil 41 dem Anhängerbremsventil 30 zugeführt wird. Die Betätigung des Steuerventils 42 aus einem Ruhezustand, in welchem der Drucklufteinlass geschlossen und der Entlüftungsauslass geöffnet ist, in eine bremsbedarfsabhängige Arbeitsposition, in welcher der Drucklufteinlass mit einem den Bremsbedarf entsprechenden Öffnungsgrad geöffnet und der Entlüftungsauslass geschlossen ist, erfolgt beispielsweise mechanisch über die Deichsel D in analoger Weise wie bei der herkömmlichen mechanischen Auflaufbremse, indem ein auflaufkraftabhängiger Auflaufweg zwischen zwei relativ zueinander beweglichen Bauteilen der Deichsel D in eine entsprechende, mehr oder weniger große Öffnungsbewegung des Steuerventils 42 umgesetzt wird.

Das Bremsventil des Anhängers A in Gestalt einer Druckluftbremsanlage ist also, ebenso wie die herkömmliche mechanische Auflaufbremse, gegenüber dem Zugfahrzeug Z völlig autark und benötigt für den Betrieb vom Zugfahrzeug nur das, was bei jedem Kraftfahrzeuganhänger, also auch beim herkömmlichen Anhänger mit Auflaufbremse und sogar beim ungebremsten Kleinanhänger ohnehin stets zwangsläufig vorhanden ist, nämlich eine elektrische Stromversorgung sowie der Bremslichtstrom über die elektrische Kupplung zwischen Zugfahrzeug und Anhänger.

Jedoch sind die Vorteile der erfindungsgemäßen autarken Druckluftbremsanlage des Anhängers A gegenüber einer Auflaufbremse enorm. Auch wenn, wie beim Ausführungsbeispiel, die Steuerung des Bremsdrucks über einen Auflaufmechanismus zur Betätigung des Steuerventils 42 erfolgt, ist dazu nur eine minimale Auflaufkraft notwendig, da die Auflaufkraft bei dem erfindungsgemäßen Bremssystem nicht die Bremskraft erzeugen muss, sondern lediglich eine Verstellbewegung des Steuerventils 41 erzeugt, während bei der herkömmlichen Auflaufbremse der Auflaufdruck die Bremskraft mechanisch erzeugen muss.

Von nicht unerheblicher Bedeutung ist bei dem erfindungsgemäßen Anhänger-Druckluftbremssystem das Steuerventil 41. Dieses trägt allerdings nichts zur bremsbedarfsgerechten Einstellung des zum Anhängerbremsventil 30 zugeführten pneumatischen Steuerdrucks bei, sondern seine Funktion ist eine andere. Es bewirkt nämlich, dass eine Bremsung des Anhängers dann, aber auch nur dann erfolgt, wenn der Fahrer des Zugfahrzeugs Z das Bremspedal betätigt, denn nur dann ist das elektrische Bremslichtsignal vorhanden, welches das Steuerventil 41 auf Steuerdruckdurchleitung schaltet. Die Einstellung des Steuerdrucks entsprechend dem jeweiligen Bremsbedarf erfolgt hingegen allein durch das Steuerventil 42.

Allerdings muss man im Auge behalten, dass im Anhängerbetrieb, beispielsweise auf holpriger Straße, möglicherweise auch durch Bewegungen der Last im Anhänger, ruckelnde Bewegungen des Anhängers auftreten können, die zu entsprechenden kleinen Öffnungsauslenkungen des Steuerventils 42 führen können, und zwar nicht nur, wenn dessen Betätigung, wie mit Bezug auf das Ausführungsbeispiel beschrieben, mechanisch über einen Auflaufweg erfolgt, sondern auch dann, wenn dessen Betätigung auf einer anderen, insbesondere einer der unten noch beschriebenen alternativen Möglichkeiten beruht. Würde das Steuerventil 41 fehlen, würden solche möglichen Ruckelbewegungen des Anhängers in Bremsbetätigungen umgesetzt, ohne dass ein Bremsen des Anhängers überhaupt erwünscht ist. Daher bildet das Steuerventil 41 diesbezüglich ein Korrektiv, denn solange das Bremspedal nicht betätigt wird, und daher an der elektrischen Bremslichtleitung E3 kein Signal anliegt, ist die Steuerdruckdurchleitung durch das Steuerventil 41 gesperrt, und diese ist nur geöffnet, wenn tatsächlich der Fahrer die Bremse betätigt.

Eine weitere, aber besonders wichtige Funktion der Kombination aus den beiden in Reihe geschalteten Steuerventilen 42 und 41 kommt hinzu. Das Steuerventil 42, das die Größe des dem Anhängerbremsventil 30 zugeführten Steuerdrucks bremsbedarfsabhängig steuert, ist nämlich vorzugsweise so ausgebildet, dass es auch in der "Schließ"-Stellung nicht vollständig geschlossen ist, sondern einen gewählten minimalen Öffnungsgrad zum Durchleiten eines entsprechenden minimalen Steuerdrucks hat. Dieser auch bei quasigeschlossenem Steuerventil 42 durchgelassene Steuerdruck würde, wenn er das Anhängerbremsventil 30 erreicht, ein bestimmtes geringes Maß der Bremsbetätigung auslösen. Solange das nachgeschaltete, beim Ausführungsbeispiel durch den Bremslichtstrom gesteuerte Steuerventil 41 geschlossen ist, kann dieser minimale Steuerdruck das Anhängerbremsventil nicht erreichen. Sobald aber der Fahrer des Zugfahrzeugs das Bremspedal betätigt und der Bremslichtstrom demzufolge fließt, öffnet das nachgeschaltete Steuerventil 41 und leitet diesen minimalen Steuerdruck zum Anhängerbremsventil 30 durch, so dass eine leichte Bremsung erfolgt. Diese leichte Bremsung des Anhängers ist unabhängig vom Vorhandensein eines Auflaufdrucks.

Die Bedeutung dieser Funktion liegt darin, dass der Anhänger damit auch bei stehendem Gespann bei Betätigung des Bremspedals des Zugfahrzeugs gebremst wird, so dass, wenn beispielsweise das Gespann an einer Steigung steht, zum Beispiel in einem Stau oder an einer roten Ampel, der Anhänger nicht nach hinten wegzurollen sucht und einen Zug auf das Zugfahrzeug ausübt, denn die stattfindende Bremsung verhindert dies. Die Größe dieses vom Steuerventil 42 stets durchgeleiteten minimalen Steuerdrucks kann dem diesem Zweck entsprechenden Bedarf eingestellt werden. Diese Funktion verbessert das Fahrverhalten des Gespanns, auch beim Anfahren am Berg, deutlich.

Alternativ zu einem Auflaufmechanismus zur Betätigung des Steuerventils 42, der einen doch recht komplizierten mechanischen Mechanismus verkörpert, sind auch andere Lösungsmöglichkeiten zur Steuerung des Öffnungsgrads des Steuerventils 42 in Abhängigkeit vom jeweils erforderlichen Bremsbedarf denkbar.

Eine erste Möglichkeit ist beispielsweise die Anordnung eines elektrischen Drucksensors im Bereich des Kupplungskopfs K der Deichsel D, beispielsweise in piezoelektrischer Ausführung. Mittels eines derartigen Drucksensors kann der Auflaufdruck des Anhängers elektrisch erfasst und gemessen werden, ohne dass irgendeine mechanische Relativbewegung innerhalb der Deichsel erforderlich ist. Das dazu gemessene elektrische Drucksignal kann dann zur elektrischen Betätigung des Steuerventils 42 benutzt werden, um dessen jeweils erforderlichen Öffnungsgrad zum Erzeugen des notwendigen, zum Anhängerbremsventil 30 zugeleiteten Steuerdrucks zu betätigen.

Statt eines Drucksensors kann in gleicher Weise auch ein elektrischer Wegsensor Anwendung finden, der einen geringfügigen Auflaufweg in ein elektrisches Signal zur Steuerung des Steuerventils 42 umsetzt.

Eine weitere denkbare Möglichkeit ist eine elektrische Betätigung des Steuerventils 42 vom Zugfahrzeug aus über ein elektrisches Signal, das die Stärke der Bremsbetätigung beim Zugfahrzeug auf den Anhänger überträgt. Dieses erfordert zwar einen gewissen zusätzlichen Aufwand beim Zugfahrzeug, der aber nicht ansatzweise vergleichbar ist mit dem gewaltigen Aufwand der Nachrüstung eines Zugfahrzeugs mit einer Druckluftbremsanlage, und der nur geringfügige, wenig aufwendige und nicht arbeitsintensive Modifikationen erfordert.

Das Maß der Bremsbetätigung durch den Fahrer des Zugfahrzeugs kann beispielsweise durch Erfassung des Bremspedalwegs des Zugfahrzeugs oder des im Zugfahrzeug erzeugten Bremsdrucks in dessen hydraulischer Bremsanlage erfasst werden, was mit elektrischen Druckfühlern kein Problem ist, und das so erfasste elektrische Signal kann über einen freien Pol der elektrischen Verbindung zwischen Zugfahrzeug und Anhänger zum Anhänger übertragen und zur Betätigungssteuerung des Steuerventils 42 verwendet werden. Ebenso sind auch drahtlose Signalübertragungsmöglichkeiten vom Zugfahrzeug auf den Anhänger, beispielsweise durch eine Funkverbindung oder eine Infrarotverbindung, vorstellbar. Ein solches Signal kann dann ein elektrisches Betätigungsorgan steuern, welches das Steuerventil 42 betätigt.

Wenn das Steuerventil 42 durch ein vom Zugfahrzeug geliefertes elektrisches Signal gesteuert wird, kann dieses statt des Bremslichtsignals gleichzeitig auch zur Ansteuerung des Steuerventils 41 benutzt werden.

Oben wurde die Funktion des Steuerventils 41 erläutert, das beim Ausführungsbeispiel eine Durchleitung des Steuerdrucks vom Steuerventil 42 zum Anhängerbremsventil 30 nur bei tatsächlicher Betätigung der Bremse durch den Fahrer des Zugfahrzeugs zulässt. Dies allerdings hat zwangläufig auch zur Folge, dass der Anhänger nicht gebremst wird, wenn beim Befahren einer Gefällestrecke das Zugfahrzeug nicht durch Betätigen des Bremspedals, sondern lediglich durch Herunterschalten des Getriebes in einen niedrigen Gang gebremst wird, und der dann nicht gebremste Anhänger einen Schub auf das Zugfahrzeug ausübt.

Zur Bewältigung dieses Problems kann daher vorgesehen werden, das Steuerventil 41 sowohl durch ein Bremslichtsignal auf der elektrischen Leitung E3 zu betätigen als auch über ein alternatives elektrisches Signal, das anzeigt, dass ein permanenter Auflaufschub des Anhängers auf das Zugfahrzeug vorhanden ist. Das kann vorzugsweise über einen elektrischen Drucksensor oder Wegsensor erfolgen, der, wie oben erwähnt, beispielsweise im Kupplungskopf bzw. in der Deichsel angeordnet sein kann, und dessen Ausgangssignal auch die Betätigung des Steuerventils 42 steuern kann, wobei das Ausgangssignal eines solchen Druckfühlers über eine Schaltung das Betätigen des Steuerventils 41 in die Arbeitsstellung bewirken kann. Das Steuerventil 41 wird dann über dieses alternative elektrische Signal nur dann in die Arbeitsstellung betätigt, wenn das alternative Signal über eine bestimmte Mindestzeitdauer anhält, so dass Ruckelbewegungen des Anhängers nicht zu dessen Auslösen führen können, andererseits aber eine Bremsung des Anhängers erfolgen kann, wenn ein andauernder Auflaufschub vom Anhänger auf das Zugfahrzeug ausgeübt wird.

Eine ähnliche Funktion kann auch auf andere Weise realisiert werden. Beispielsweise ist es denkbar, einen Neigungssensor zu verwenden, der bei Bergabfahrt die Neigung des Anhängers erfaßt und daraus ein Bremssignal ableitet, wobei dann keine Verzögerungsschaltung erforderlich ist, um ein Ruckeln von einem permanenten Auflaufschub zu unterscheiden.

Vorstehend wurde das erfindungsgemäße Anhänger-Druckluftbremssystem unter Zugrundelegung einer pneumatischen Steuerung des Anhängerbremsventils (30) beschrieben, nämlich mittels eines Steuerdrucks, der mit Hilfe von Druckluft aus dem Druckluftvorratsbehälter 13 über die Steuerventile 42 und 41 dem Anhängerbremsventil 30 zugeführt wird. Dies entspricht der klassischen Realisierung von Druckluftbremssystemen mit Verwendung der Druckluft auch als Steuerkraft.

Bei dem erfindungsgemäßen Anhänger-Druckluftbremssystem ist allerdings auch eine elektrische Betätigung des Anhängerbremsventils 30 denkbar. Das Steuerventil 41 wäre dann durch einen elektrischen Schalter ersetzt, und das Steuerventil 42 wäre durch einen elektrischen Signalgeber ersetzt, der ein elektrisches Bremsbedarfssignal nach einer der oben erwähnten Möglichkeiten, also mechanisch in Gestalt einer Auflaufbewegung aus einem elektrischen Signal eines Drucksensors, oder einem vom Zugfahrzeug übertragenen elektrischen Signal erzeugt, und das dann über den das Steuerventil 41 ersetzenden elektrischen Schalter einem elektrischen Betätigungsorgan zum Betätigen des Anhängerbremsventils 30 zugeleitet wird.

Der oben beschriebene Federspeicher 16 bewirkt bekanntermaßen eine automatische permanente Betätigung der Bremse, wenn keine Druckluft in der Anlage vorhanden ist. Bei dem bekannten Anhänger-Druckluftbremssystem, das mit einem Druckluftbremssystem im Zugfahrzeug in Verbindung steht, bewirkt dies auch eine automatische Bremsung des Anhängers im Falle eines Abreißens der Druckluftverbindung zum Zugfahrzeug, da hierdurch die Bremsanlage des Anhängers entlüftet wird.

Bei dem erfindungsgemäßen autarken Anhänger-Druckluftbremssystem eignet sich die ohnehin vorhandene mehrpolige elektrische Verbindung zwischen dem Zugfahrzeug und dem Anhänger zum Bewerkstellen ähnlicher und zusätzlicher Sicherheitsfunktionen. Dazu kann in der Druckluftleitung, die vom Druckluftvorratsbehälter 13 zur Luftkammer 19 des Federspeichers führt, ein steuerbares Ventil 20 eingeschaltet sein, das über ein elektrisches Signal auf (mindestens) einer elektrischen Leitung E4 betätigbar ist.

Damit kann vorgesehen sein, dass eine Druckluftbeaufschlagung des Federspeichers 16 aus dem Druckluftvorratsbehälter 13 erst möglich ist, wenn im Zugfahrzeug der Zündschlüssel eingesteckt und das Zündschloss betätigt worden ist und aufgrund eines dann ankommenden elektrischen Signals auf der elektrischen Leitung E4 das Ventil 20 geöffnet wird. Der Anhänger bleibt dann bei entlüftet bleibendem Federspeicher gebremst, bis das Zündschloss betätigt wird. Ergänzend kann auch vorgesehen sein, dass die Druckluftbeaufschlagung des Federspeichers und damit ein Lösen der Bremse und ein Losfahren erst erfolgen kann, wenn im Zugfahrzeug das Bremspedal einmal betätigt worden ist, wie das bei Automatikgetrieben üblicherweise als Voraussetzung für das Schalten aus der Parkstellung in die Fahrstellung notwendig ist.

Weiter kann vorgesehen sein, dass über die elektrische Leitung E4 ein Signal zugeführt wird, das anzeigt, dass die elektrische Verbindung zwischen dem Zugfahrzeug und dem Anhänger besteht, und dass über das Ventil 20 ein automatisches Entlüften des Federspeichers und damit eine Bremsung des Anhängers erfolgt, wenn die elektrische Verbindung zwischen Anhänger und Zugfahrzeug unterbrochen wird.

Weiter kann vorgesehen sein, dass das Abziehen des Zündschlüssels im Zugfahrzeug das automatische Entlüften des Federspeichers über ein Signal auf der elektrischen Leitung E4 zum Ventil 20 bewirkt, was einen sehr hohen Sicherheitsgewinn beim Abstellen des Gespanns am Berg bringt.

Schließlich kann über die elektrische Verbindung zwischen Zugfahrzeug und Anhänger auch das Rückwärtsfahrsignal, also Strom auf der zu den Rückfahrscheinwerfern führenden elektrischen Leitung, dazu ausgenützt werden, beispielsweise über eine Blockierung des Steuerventils 41 in der Offenstellung, das Bremsen des Anhängers beim Rückwärtsfahren zu verhindern. Das ist deshalb wichtig, weil beim Rückwärtsfahren mit dem Anhänger im beladenen Zustand der Schubdruck auf den Anhänger über die Deichsel übertragen wird und bei der Steuerung der Anhängerbremse über die Auflaufschubkraft bei einer auch leichten Bremsung im Zugfahrzeug der volle Bremsdruck durchgesteuert würde. Da das Fahrzeug sich beim Rangieren aber nur wenig bewegt, ist das Verhältnis von Geschwindigkeit zur Bremsverzögerung dann sehr aggressiv. Durch ein Sperren der Anhängerbremsbetätigung können diese unerwünschten Vollbremsungseffekte beim Anhänger während des Rückwärtsfahrens vermieden werden.

## Patentansprüche

1. Druckluft-Bremssystem für einen Kraftfahrzeuganhänger (A), die über eine Zugdeichsel (D) mit einem Zugfahrzeug (Z) kuppelbar und über eine elektrische Kupplung (E) mit dem Zugfahrzeug (Z) elektrisch verbindbar ist und druckluftbetätigte Radbremsen hat,
wobei das Druckluft-Bremssystem als bezüglich des Zugfahrzeugs (Z) autarkes Bremssystem ausgebildet ist, das eine eigene Druckluftbeschaffungsanlage aufweist, die einen antreibbaren Kompressor (11) und einen von diesem gespeisten Druckluftvorratsbehälter (13) umfasst,
und das ein zwischen den Druckluftvorratsbehälter (13) und die Radbremsen (21,22) geschaltetes Anhängerbremsventil (30) aufweist, dessen Betätigung in Abhängigkeit von einer Steuerkraft erfolgt, die wiederum durch ein den jeweiligen Bremsbedarf entsprechendes Steuersignal erzeugt wird, das teilweise oder ganz durch den Anhänger selbst erzeugt wird oder vom Zugfahrzeug auf den Anhänger übertragen wird, **dadurch gekennzeichnet, dass** die durch das Steuersignal gesteuerte Steuerkraft ein mittels Druckluft aus dem Druckluftvorratsbehälter (13) bereitgestellter pneumatischer Steuerdruck ist, und dass der pneumatische Steuerdruck durch ein Steuerventil (42) bereitgestellt wird, das einen mit dem Druckluftvorratsbehälter (13) verbundenen Drucklufteinlass und einen mit dem Steuereingang des Anhängerbremsventils (30) verbundenen Druckluftauslass aufweist, und das durch das Steuersignal betätigbar ist, und das je nach Art des Steuersignals als ein mechanisch oder elektrisch betätigtes Ventil ausgebildet ist, das den jeweiligen Steuerdruck in Abhängigkeit von seinem Öffnungsgrad erzeugt.

2. Druckluft-Bremssystem nach Anspruch 1, wobei das Steuerventil (42) als 3/2-Wegeventil mit dem Drucklufteinlass und dem Druckluftauslass sowie mit einem Entlüftungsauslass und mit den Funktionen öffnungsgradabhängige Druckluftdurchleitung und Entlüftung ausgebildet ist.

3. Druckluft-Bremsanlage nach Anspruch 1 oder 2, wobei dem Steuerventil (42) ein zusätzliches Steuerventil (41) in der Steuerdruckleitung zwischen dem Druckluftauslass des Steuerventils (42) und dem Anhängerbremsventil (30) nachgeschaltet ist, wobei dieses zusätzliche Steuerventil (41) mittels eines elektrischen zusätzlichen Steuersignals (E3), das durch die Betätigung der Bremse des Zugfahrzeugs (Z) erzeugt wird, aus einer die Steuerdruckleitung absperrenden in eine die Steuerdruckleitung öffnende Stellung betätigbar ist.

4. Druckluft-Bremsanlage nach Anspruch 3, wobei das zusätzliche Steuerventil (41) mittels eines weiteren elektrischen Steuersignals, das einen Rückwärtsfahrbetrieb des Zugfahrzeugs anzeigt, in seiner die Steuerdruckleitung absperrenden Stellung arretierbar ist.

5. Druckluft-Bremssystem nach Anspruch 3 oder 4, wobei das zusätzliche Steuerventil (41) als 3/2-Wegeventil mit einem Drucklufteinlass, einem Druckluftauslass, und einem Entlüftungsauslass und mit den Funktionen Steuerdruckdurchleitung und Entlüftung ausgebildet ist.

6. Druckluft-Bremssystem nach einem der Ansprüche 3 bis 5, wobei das Steuerventil auch bei Fehlen eines die Betätigung der Zugfahrzeugbremse anzeigenden Steuersignals die Steuerdruckleitung nicht vollständig absperrt, sondern einen minimalen Öffnungsgrad aufweist und dadurch einen eingestellten minimalen Steuerdruck zum Steuereingang des Anhängerbremsventils (30) durchleitet.

7. Druckluft-Bremssystem für einen Kraftfahrzeuganhänger (A), die über eine Zugdeichsel (D) mit einem Zugfahrzeug (Z) kuppelbar und über eine elektrische Kupplung (E) mit dem Zugfahrzeug (Z) elektrisch verbindbar ist und druckluftbetätigte Radbremsen hat,
wobei das Druckluft-Bremssystem als bezüglich des Zugfahrzeugs (Z) autarkes Bremssystem ausgebildet ist, das eine eigene Druckluftbeschaffungsanlage aufweist, die einen antreibbaren Kompressor (11) und einen von diesem gespeisten Druckluftvorratsbehälter (13) umfasst,
und das ein zwischen den Druckluftvorratsbehälter (13) und die Radbremsen (21,22) geschaltetes Anhängerbremsventil (30) aufweist, dessen Betätigung in Abhängigkeit von einer Steuergröße erfolgt, die wiederum durch ein den jeweiligen Bremsbedarf entsprechendes Steuersignal erzeugt wird, das teilweise oder ganz durch den Anhänger selbst erzeugt wird oder vom Zugfahrzeug auf den Anhänger übertragen wird, **dadurch gekennzeichnet, dass** die Steuergröße zur Betätigung des Anhängerbremsventils (30) entsprechend der Größe des Steuersignals durch einen durch das Steuersignal mechanisch oder elektrisch gesteuerten elektrischen Signalgeber als elektrischer Strom elektrisch erzeugt wird und über ein elektrisches Betätigungsorgan auf das Anhängerbremsventil (30) ausgeübt wird,
und dass zwischen den Signalgeber und das dem Anhängerbremsventil zugeordnete elektrische Betätigungsorgan ein zwischen einer Öffnungsstellung und einer Schließstellung betätigbarer elektrischer Schalter geschaltet ist, der durch ein elektrisches zusätzliches Steuersignal, das durch Betätigung der Bremse des Zugfahrzeugs (Z) erzeugt wird, in seine Schließstellung betätigbar ist.

8. Druckluft-Bremssystem nach Anspruch 7, wobei das elektrische zusätzliche Steuersignal, das eine Betätigung der Zugfahrzeugbremse anzeigt, unabhängig von der durch den Signalgeber erzeugten Steuergröße eine gewählte minimale Betätigung des Anhängerbremsventils bewirkt.

9. Druckluft-Bremssystem nach einem der Ansprüche 1 bis 8, wobei ein elektrisches Ausgangssignal eines Sensor zum Erfassen einer Auflaufschubkraft oder eines Auflaufwegs des Anhängers auf das Zugfahrzeug über ein Zeitglied das zusätzliche Steuerventil (41) nach Anspruch 6 oder einen dieses ersetzenden elektrischen Schalter nach Anspruch 11 im Falle des Vorhandenseins einer über eine vorgegebene Zeitspanne andauernden Auflaufschubkraft auch dann betätigt, wenn die Bremse des Zugfahrzeugs nicht betätigt wird.

10. Druckluft-Bremssystem nach einem der Ansprüche 1 bis 9, wobei der Kompressor (11) mittels eines Elektromotors (14), der über die elektrische Kupplung (E) zwischen dem Zugfahrzeug (Z) und dem Anhänger (A) und/oder über eine im Anhänger (A) eingebaute Batterie elektrisch gespeist wird oder mechanisch über eine kuppelbare Antriebsverbindung mit mindestens einem der Räder des Anhängers antreibbar ist.

11. Druckluft-Bremssystem nach einem der Ansprüche 1 bis 10, mit einem Federspeicher (16), der bei Entlüfung die Radbremsen des Anhängers betätigt, und in dessen Druckluftbeaufschlagungsleitung ein Ventil (20) geschaltet ist, das zwischen einer die Druckluftzufuhr zum Federspeicher (16) durchleitenden Stellung und einer den Federspeicher entlüftenden Stellung umschaltbar ist, und wobei das Ventil (20) elektrisch angesteuert wird, um das Ventil nur dann in seine die Druckluftzufuhr durchleitende Stellung zu schalten, wenn eine elektrische Verbindung vom Anhänger zum Zugfahrzeug besteht und/oder nachdem im Zugfahrzeug der Zündschlüssel eingesteckt, das Zündschloss betätigt worden ist und gegebenfalls eine Bremsbetätigung stattgefunden hat, und das Ventil in die Entlüftestellung umgeschaltet wird, wenn die elektrische Verbindung vom Anhänger zum Zugfahrzeug unterbrochen wird und/oder der Zündschlüssel aus dem Zündschloss herausgezogen wird.

## Claims

1. A pneumatic braking system for a motor vehicle trailer (A) that can be coupled to a towing vehicle (Z) via a drawbar (D), is electrically connectable to the towing vehicle (Z) via an electrical coupling (E) and has pneumatically actuated wheel brakes,
wherein the pneumatic braking system is configured as a braking system that is autonomous from the towing vehicle (Z) and has its own compressed air supply system with a drivable compressor (11) and a compressed air supply tank (13) fed by the same;
and having a trailer braking valve (30) connected between the compressed air supply tank (13) and the wheel brakes (21, 22), the actuation of which is effected as a function of a control force, which in turn is generated by a control signal corresponding to the respective braking requirement, the signal being generated by the trailer itself as a whole or in part, or being transmitted from the towing vehicle to the trailer,
**characterised in that** the control force controlled by the control signal is a pneumatic control pressure provided by means of compressed air from the compressed air supply tank (13), and that the pneumatic control pressure is provided by a control valve (42) having a compressed air inlet connected to the compressed air supply tank (13) and a compressed air outlet connected to the control input of the trailer braking valve (30), and being operable by means of the control signal, and being configured, depending on the type of the control signal, as a mechanically or electrically operated valve generating the respective control pressure as a function of its amount of opening.

2. The pneumatic braking system according to claim 1, wherein the control valve (42) is configured as a 3/2-way valve with the compressed air inlet and the compressed air outlet and a venting port, and having the functionality of passing compressed air as a function of the amount of opening, and venting.

3. The pneumatic braking system according to claim 1 or 2, wherein an additional control valve (41) is provided downstream of the control valve (42) in the control pressure line between the compressed air outlet of the control valve (42) and the trailer braking valve (30), wherein this additional control valve (41) can be actuated, by means of an additional electrical control signal (E3) generated by actuation of the brake of the towing vehicle, from a position blocking the control pressure line into a position opening the control pressure line.

4. The pneumatic braking system according to claim 3, wherein the additional control valve (41) is lockable in its position blocking the control pressure by means of another electrical control signal indicating a reverse driving operation of the towing vehicle.

5. The pneumatic braking system according to claim 3 or 4, wherein the additional control valve (41) is configured as a 3/2-way valve having a compressed air inlet, a compressed air outlet, a venting port, and having the functionality of passing control pressure, and venting.

6. The pneumatic braking system according to any one of claims 3 to 5, wherein the control valve, even in case of a missing control signal that indicates an actuation of the brake of the towing vehicle, does not completely block the control pressure line, but keeps a minimal amount of opening, thus passing a set minimal control pressure to the control inlet of the trailer braking valve (30).

7. The pneumatic braking system for a motor vehicle trailer (A) that can be coupled to a towing vehicle (Z) via a drawbar (D), is electrically connectable to the towing vehicle (Z) via an electrical coupling (E) and has pneumatically actuated wheel brakes,
wherein the pneumatic braking system is configured as a braking system that is autonomous from the towing vehicle (Z) and has having its own compressed air supply system with a drivable compressor (11) and a compressed air supply tank (13) fed by the same;
and having a trailer braking valve (30) connected between the compressed air supply tank (13) and the wheel brakes (21, 22), the actuation of which is effected as a function of a control parameter, which in turn is generated by a control signal corresponding to the respective braking requirement, the signal being generated by the trailer itself as a whole or in part, or being transmitted from the towing vehicle to the trailer,
**characterised in that** the control parameter for actuating the trailer braking valve (30) is generated electrically by a mechanically or electrically controlled electrical signal transmitter as an electrical current corresponding to the size of the control signal, and is applied to the trailer braking valve (30) by means of an electrical actuating element,
and that an electrical switch operable between an opening position and a closing position is connected between the signal transmitter and the electrical actuating element associated with the trailer braking valve, the switch being operable into its closing position by an additional electrical control signal generated by actuation of the brake of the towing vehicle (Z).

8. The pneumatic braking system according to claim 7, wherein the additional electrical control signal that indicates an actuation of the brake of the towing vehicle effects a selective minimal actuation of the trailer braking valve independently of the control parameter generated by the signal transmitter.

9. The pneumatic braking system according to any one of claims 1 to 8, wherein an electrical output signal of a sensor for detecting the overrunning thrust force or an overrunning distance of the trailer towards the vehicle actuates via a time element the additional control valve (41) according to claim 6, or an electrical switch replacing the same according to claim 1, if an overrunning thrust force is permanently present over a given time interval, even if the brake of the towing vehicle is not actuated.

10. The pneumatic braking system according to any one of claims 1 to 9, wherein the compressor (11) can be driven by means of an electric motor (14) that is electrically supplied via the electrical coupling (E) between the towing vehicle (Z) and the trailer (A) and/or via a battery installed in the trailer (A), or mechanically by means of a driving connection that can be coupled to at least one of the wheels of the trailer.

11. The pneumatic braking system according to any one of claims 1 to 10, having a spring-loaded mechanism (16) actuating the wheel brakes of the trailer when vented, and in the pressure application line of which a valve (20) is connected that can be switched between a position passing the compressed air supply to the spring-loaded mechanism (16) and a position venting the spring-loaded mechanism, and wherein the valve (20) is electrically driven to switch the valve into its position passing the compressed air supply only if there is an electrical connection from the trailer to the towing vehicle, and/or after the ignition key has been inserted in the towing vehicle, the ignition lock has been operated and possibly an actuation of the brake has been effected, and the valve is switched into the venting position if the electrical connection from the trailer to the towing vehicle is interrupted and/or the ignition key is removed from the ignition lock.

## Revendications

1. Système de freinage à air comprimé pour une remorque de véhicule à moteur (A) qui peut être accouplée au moyen d'une barre de timon (D) avec un véhicule tracteur (Z) et électriquement reliée avec le véhicule tracteur (Z) au moyen d'un couplage électrique (E), et comprenant des freins de roue actionnés par air comprimé,
le système de freinage à air comprimé étant configuré comme système de freinage autonome par rapport au véhicule tracteur (Z) et ayant son propre appareil d'alimentation en air comprimé comprenant un compresseur entraînable (11) et un réservoir de stockage d'air comprimé (13) alimenté par ceci,
et ayant une soupape de freinage de remorque (30) connectée entre le réservoir de stockage d'air comprimé (13) et les freins de roue (21, 22), dont l'actionnement est effectué en fonction d'une force de commande qui est, à son tour, générée par un signal de commande correspondant à la demande de freinage respective, le signal étant généré partiellement ou entièrement par la remorque, ou étant transmis à la remorque du véhicule tracteur,
**caractérisé en ce que** la force de commande commandée par le signal de commande est une pression de commande pneumatique fournie par air comprimé à partir du réservoir de stockage d'air comprimé (13), et **en ce que** la pression de commande est fournie au moyen d'une soupape de commande (42) ayant une entrée d'air comprimé reliée avec le réservoir de stockage d'air comprimé (13), et une sortie d'air comprimé reliée avec une entrée de commande de la soupape de freinage de remorque (30), et étant actionnable par le signal de commande, et étant configurée comme soupape actionnée, en fonction du type du signal de commande, par voie mécanique ou électrique pour générer la pression de commande respective en fonction de son degré d'ouverture.

2. Système de freinage à air comprimé selon la revendication 1, dans lequel la soupape de commande (42) est configurée comme soupape à 3/2 voies, avec l'entrée d'air comprimé et la sortie d'air comprimé, et avec une sortie de purge d'air, et avec les fonctions de passage d'air comprimé en fonction du degré d'ouverture et de purge d'air.

3. Système de freinage à air comprimé selon la revendication 1 ou 2, dans laquelle une soupape de commande (41) additionnelle est montée en aval de la soupape de commande (42) dans la ligne de pression de commande, entre la sortie d'air comprimé de la soupape de commande (42) et la soupape de freinage de remorque (30), la soupape de commande (41) additionnelle étant actionnable, d'une position bloquant la ligne de pression de commande à une position ouvrant la ligne de pression de commande, au moyen d'un signal de commande électrique (E3) additionnel généré par l'actionnement du frein du véhicule tracteur (Z).

4. Système de freinage à air comprimé selon la revendication 3, dans laquelle la soupape de commande (41) additionnelle peut être verrouillée dans sa position bloquant la ligne de pression de commande, au moyen d'un autre signal de commande électrique indiquant le mouvement en arrière du véhicule tracteur.

5. Système de freinage à air comprimé selon la revendication 3 ou 4, dans laquelle la soupape de commande (41) additionnelle est configurée comme soupape à 3/2 voies, avec une entrée d'air comprimé, une sortie d'air comprimé et une sortie de purge d'air, et avec les fonctions de passage d'air comprimé de commande et de purge d'air.

6. Système de freinage à air comprimé selon l'une quelconque des revendications 3 à 5, dans lequel, même en cas de l'absence d'un signal de commande indiquant l'actionnement du frein du véhicule tracteur, la soupape de commande ne bloque pas entièrement la ligne de pression de commande, mais maintient un degré d'ouverture minimale, ainsi passant une pression de commande minimale prédéterminée à l'entrée de commande de la soupape de freinage de remorque (30).

7. Système de freinage à air comprimé pour une remorque de véhicule à moteur (A) qui peut être accouplée au moyen d'une barre de timon (D) avec un véhicule tracteur (Z) et électriquement reliée avec le véhicule tracteur (Z) au moyen d'un couplage électrique (E), et comprenant des freins de roue actionnés par air comprimé,
le système de freinage à air comprimé étant configuré comme système de freinage autonome par rapport au véhicule tracteur (Z) et ayant son propre appareil d'alimentation en air comprimé comprenant un compresseur entraînable (11) et un réservoir de stockage d'air comprimé (13) alimenté par ceci,
et ayant une soupape de freinage de remorque (30) connectée entre le réservoir de stockage d'air comprimé (13) et les freins de roue (21, 22), dont l'actionnement est effectué en fonction d'un paramètre de commande qui est, à son tour, généré par un signal de commande correspondant à la demande de freinage respective, le signal étant généré partiellement ou entièrement par la remorque, ou étant transmis à la remorque du véhicule tracteur, **caractérisé en ce que** le paramètre de commande pour l'actionnement de la soupape de freinage de remorque (30) est généré comme courant électrique, correspondant à la dimension du signal de commande, au moyen d'un transmetteur de signaux commandé du signal de commande par voie mécanique ou électrique, et est appliqué au moyen d'un élément d'actionnement électrique à la soupape de freinage de remorque (30),
et **en ce qu'**un commutateur électrique est branché entre le transmetteur de signaux et l'élément d'actionnement électrique associé à la soupape de freinage de remorque, le commutateur étant actionnable entre une position ouverte et une position fermée, et étant actionnable vers sa position fermée au moyen d'un signal de commande additionnel généré par l'actionnement du frein du véhicule tracteur (Z).

8. Système de freinage à air comprimé selon la revendication 7, dans lequel le signal de commande électrique additionnel indiquant l'actionnement du frein du véhicule tracteur effectue un actionnement minimal sélectionné de la soupape de freinage de remorque, indépendamment du paramètre de commande généré par le transmetteur de signaux.

9. Système de freinage à air comprimé selon l'une quelconque des revendications 1 à 8, dans lequel un signal électrique d'un capteur pour détecter une force d'inertie ou une distance d'inertie de la remorque vers le véhicule tracteur actionne, au moyen d'un élément de temporisation, la soupape de commande (41) additionnelle selon la revendication 6, ou un commutateur électrique remplaçant celle-ci selon la revendication 1, en cas de la présence d'une force d'inertie persistante pour un intervalle de temps prédéfini, même si le frein du véhicule tracteur n'est pas actionné.

10. Système de freinage à air comprimé selon l'une quelconque des revendications 1 à 9, dans lequel le compresseur (11) peut être entraîné soit par un moteur électrique (14) alimenté électriquement au moyen du couplage électrique (E) entre le véhicule tracteur (Z) et la remorque (A) et/ou au moyen d'une batterie installée dans la remorque (A), soit par voie mécanique au moyen d'une connexion d'entraînement à couplage sélectif avec une des roues de la remorque.

11. Système de freinage à air comprimé selon l'une quelconque des revendications 1 à 10, avec un ressort accumulateur (16) actionnant les freins de roue de la remorque en cas de son évacuation, dans lequel une soupape (20) est montée dans sa ligne d'alimentation de pression, la soupape étant commutable entre une position passant l'alimentation en pression vers le ressort accumulateur (16) et une position évacuant le ressort accumulateur, la soupape (20) étant commandée électriquement, pour commuter la soupape dans sa position passant l'alimentation en air comprimé seulement lorsqu'il y a une liaison électrique entre la remorque et le véhicule tracteur, et/ou lorsque le clé de contact est inséré dans le véhicule tracteur, la serrure de contact est actionnée et, le cas échéant, le frein est actionné, et le soupape est commutée vers la position d'évacuation lorsque la liaison électrique entre la remorque et le véhicule tracteur est interrompu et/ou le clé de contact est enlevé de la serrure de contact.
